# EUROPEAN PATENT SPECIFICATION

(11) **EP 3 000 528 B1**
(45) Date of publication and mention of the grant of the patent: **16.12.2020**
(21) Application number: 14186463.7
(22) Date of filing: 25.09.2014
(51) Int. Cl.: B01L 3/00, B01F 5/04, B01F 13/00, B01F 3/08

(54) **MICROFLUIDIC DEVICE FOR THE GENERATION OF COMBINATORIAL SAMPLES**
MIKROFLUIDISCHE VORRICHTUNG ZUR ERZEUGUNG VON KOMBINATORISCHEN PROBEN
DISPOSITIF MICROFLUIDIQUE POUR LA PRODUCTION COMBINATOIRE D'ÉCHANTILLONS

(43) Date of publication of application: 30.03.2016
(73) Proprietor: European Molecular Biology Laboratory, 69117 Heidelberg (DE)
(72) Inventor: MERTEN, Christoph, 69117 Heidelberg (DE); UTHARALA, Ramesh, 69117 Heidelberg (DE); EICHER, Dominic, 69117 Heidelberg (DE)
(74) Representative: Harrison, Robert John

(56) References cited:
- WO-A2-2013/037962
- US-A- 5 922 591
- US-A1- 2005 087 122
- US-A1- 2007 227 591
- US-A1- 2012 283 108
- KRZYSZTOF CHURSKI ET AL: "High-throughput automated droplet microfluidic system for screening of reaction conditions", LAB ON A CHIP, ROYAL SOCIETY OF CHEMISTRY - CAMBRIDGE, GB, vol. 10, 16 February 2010 (2010-02-16), pages 816-818, XP007912320, ISSN: 1473-0197, DOI: 10.1039/B925500A

## Description

### Field of the invention

The present disclosure relates to a microfluidic device and a method allowing the generating and screening of combinatorial samples.

### Background of the invention

Microfluidic devices consist typically of channel networks with channel dimensions of 10-500 µm in which liquids can be actuated by different means. More sophisticated microfluidic analysis systems have been developed using polymers with the purpose of miniaturizing existing lab scale experimental setups, to reduce sample reagent consumption and thereby cost, but also to gain sensitivity, throughput and multiplexing capabilities.

One of the basic technologies for modern microfluidics was developed in the 1990s and has been termed soft lithography (Xia and Whitesides, 1998). It is based on earlier photolithographic techniques developed to fabricate microelectronic devices (Nall and Lathrop, 1958). Soft lithography allows fast prototyping of new microfluidic chip designs by replica folding. Briefly, it allows repetitive manufacture of identical microfluidic chips by using micro scale structures patterned onto a silicon wafer as a negative mold. The time required from mold fabrication to the use of a finished microfluidic chip is at most one day. Molds are filled with polydime-thylsiloxane (PDMS) and baked. The cured PDMS chip can be cut out using a scalpel. Molds can be re-filled with PDMS and thus can be reused many times (Duffy et al., 1998). It has many advantages when used for microfluidic chip production in the context of biological and biomedical applications. The cured polymer is biocompatible and highly gas permeable, which allows the culturing of cells on-chip and the performance of many biochemical assays. Since PDMS has optical properties similar to that of glass, microfluidic devices made from this material are transparent and processes carried out on-chip can be monitored directly under a standard light microscope. Additionally, it is very flexible and easy to handle which makes it very amenable to use in the development of new prototype chips (Xia and Whitesides, 1998).

WO 2007/081386 provides a microfluidic channel for mixing and investigating aqueous phase droplets encapsulated in an oil stream.

A publication of Shaojiang Zeng et al. "Microvalve-actuated precise control of individual droplets in microfluidic devices", LabChip, May 21, 2009; 9(10): 1340-1343 describes an example for the generation of sequences of individual droplets separated by an immiscible oil in a microfluidic channel. A droplet marker is described that is capable of generating four different droplet species that can be fused one by one in a combinatorial fashion. While in theory this approach allows for the generation of many mixtures of different compounds (that can be screened for a desired effect or exploited for on-chip synthesis of compound libraries) the system has several limitations: The system is dependent on droplet fusion and only allows for the generation of combinatorial droplet pairs; The system is driven by negative pressure. All flow is generated by aspirating from the outlet resulting in different droplet sizes for the different compounds when applying constant valve opening times. Even though this can be compensated in theory by adjusting the individual valve opening times, only a poor level of control can be achieved. Since each infused compound needs a specific valve opening time, it seems very challenging to systematically generate all possible droplet pairs (and synchronize the generation of the individual droplets to allow for pairing). In conclusion, the system can be hardly scaled up (the working principle was shown for 4 infused compounds, only, and solely two droplet species were fused). Furthermore, a negative pressure driven system has strict limitations in terms of the maximum flow rates and hence the throughput.

EP 1 601 874 describes the use of mechanical devices such as a Braille-display for closing and opening valves in a microfluidic system. WO 2013/037962 discloses a microfluidic device according to the preamble of claim 1.

It is an object of the present disclosure to overcome at least one of the disadvantages of prior art.

### Summary of the invention

The present disclosure provides a microfluidic device according to claim 1 for producing droplets of at least one sample into an immiscible phase, the device comprising a droplet maker connecting an immiscible phase channel and a sample channel having a plurality of sample inlets connected to a plurality of sample inlet channels injecting the at least one sample into the sample channel, wherein the injection of the at least one sample is controlled by a plurality of sample valves, so that the at least one sample flows either towards a sample waste outlet or into one of the plurality of sample inlet channels, wherein the plurality of sample inlet channels have the same hydrodynamic resistance resulting from the length, height and width of the sample inlet channel upstream of the droplet maker , the microfluidic device has an outlet channel downstream of the droplet maker, wherein the droplets flow into said outlet channel. The hydrodynamic resistance of the outlet channel is lower than the hydrodynamic resistance of the immiscible phase channel, and said hydrodynamic resistance of the outlet channel resulting from the length, height and width of the outlet channel is lower than the hydrodynamic resistance of the sample inlets channels.

The at least one sample inlet channel may have a sample fluidic resistor to adjust its length. It is obvious for a person skilled in the art that the hydrodynamic resistance of a channel is related to the parameters of length, height and width of a channel. Thus, a person ordinary skilled in the art will be able without undue burden to determine the hydrodynamic resistance of a particular channel or tubing.

The at least one valve may be connected to a pressurized sample reservoir to allow the sample to flow into the microfluidic device. In this embodiment, the at least one valve is used to allow samples stored in a pressurized sample reservoir to flow into the microfluidic device or chip.

The length, height and width of the immiscible phase channel upstream of the droplet maker have also to be taken into account to ensure a higher hydrodynamic resistance of the immiscible phase channel than the sample channel to avoid that the at least one sample preferably enters the immiscible phase channel. Again, a person ordinary skilled in the art will easily be able to choose parameters ensuring the intended resistance ratio.

One possibility to ensure a higher resistance in the immiscible phase channel is an immiscible phase fluidic resistor of the immiscible phase channel upstream of the droplet maker to ensure a higher resistance of the immiscible phase channel than the resistance of the sample channel to avoid that the at least one sample can enter the immiscible phase channel.

A read-out channel can be connected to the outlet channel, wherein the read-out channel is a separable tubing. Thus, read-out channels can be filled with droplets or a sequence of droplets like a binary code and the read-out channel can be separated after finalizing the respective sequence or barcode.

The microfluidic device of the instant disclosure may have additional immiscible phase inlets directly at a transition point where samples are flushed out of at least one sample storage reservoir into a second microfluidic device. The at least one sample storage reservoir may be a tubing or microwell plate.

It is intended that the diameter of the at least one sample storage reservoir is at least twice of the diameter of the read-out channel.

Further, the additional immiscible phase inlets can be arranged as additional outer channels or channels arranged coaxially with the sample storage.

The at least one sample can be at least one of an aqueous solution, an organic solvent or a combination thereof and the immiscible phase may comprise oil like mineral oil, fluorinated oil or any other liquid not miscible with an aqueous liquid, organic solvent or a combination thereof. It is within the scope of the present disclosure that different immiscible phase can be used, like different types of oil or immiscible phases having different properties, for example different optical properties.

The microfluidic device may have a read-out module for analysing the sample droplet or sequence of sample droplets in the outlet channel or in the read-out channel. Alternatively a separable read-out channel can be transferred to an external read-out device.

Another object of the present disclosure is a method for providing a sequence of droplets of at least one sample, according to claim 8, the method comprising:
- providing at least two compounds to a microfluidic device according to one of claims 1 to 7;
- producing at least one combinatorial sample out of the at least two compounds having a specific mixture of the at least two compounds;
- injecting the at least one combinatorial sample into a microfluidic device;
- generating at least one droplet of the at least one combinatorial sample in an immiscible phase; and
- separating the at least one droplet with at least one immiscible phase;
- providing at least on priming droplet in front of the first of the at least one droplet of the at least one combinatorial sample.

The method of the present disclosure can be used to generate a sequence of droplets comprising different combinatorial samples, wherein a sequence of droplets may comprise at least 50 droplets.

The method of the present disclosure may comprise the preparation of a priming droplet or a plurality of priming droplets, which comprises the solvent of the at least one combinatorial sample or only one of the at least two compounds for preparing the combinatorial sample.

Further, the at least one compound of the at least two compounds may be a prokaryotic or eukaryotic cell or wherein the at least one combinatorial sample comprises one prokaryotic or eukaryotic cell.

The at least one compound of the at least two compounds may be aspirated or transferred from a storage reservoir.

The combinatorial sample may be transferred from a storage reservoir into a read-out channel having a diameter, which is no more than half of the diameter of the storage reservoir

It is within the scope of the present disclosure that the droplets may be produced with a significantly smaller diameter than the one of the outlet channel or read-out channel and wherein the droplets are confined or separated from droplets containing a different sample composition using plugs of a third immiscible phase having a diameter significantly above the diameter of the reservoir to space out the droplets.

The at least one compound may be aspirated from microwell plates for delivery to a microfluidic device using a miscible carrier phase.

Aspirating the at least one compound can be synchronized with the valves of the microfluidic device. The synchronization ensures that droplets or plugs contain only pure samples or samples containing additional substrates.

Another way to produce only the intended samples is that only a medium section of the aspirated at least one compound will be used.

The method of the present disclosure comprises further the generation of an optical identifier between optical barcodes, wherein optical barcode comprises sequential droplet sequences using different properties of the droplets and wherein the end of each optical barcode is marked by droplets having a unique composition.

Further, a droplet or a plurality of droplets may be used to produce a unique signal different from the signals used for the generation of individual digits of a sequential barcode.

Prior to injecting the at least one combinatorial sample into a microfluidic device the remains of a previous combinatorial sample may be flushed into the droplet maker using the following combinatorial sample to produce a waste plug followed by transferring all aqueous liquids to the waste while the immiscible phase is still injected into the droplet maker so that a spacer of the immiscible phase separates the waste plug from the following combinatorial sample.

The outlet channel or read-out channel can be filled with a sequence of priming droplets prior to generating droplets of a sample to ensure that the filled outlet or read-out channel provides already the conditions during the production of droplets of samples.

### Brief description of the Figures

Examples and embodiments of the present disclosure will now be described and shown in the following figures. It is obvious for a person ordinary skilled in the art, that the present disclosure is not limited tot he shown embodiments. It shows:

- Figure 1: Schematically depiction of providing optimal start conditions.
- Figure 2: Schematic illustration of one embodiment of the invention.
- Figure 3: Schematic depiction of a 2D and 3D configuration for injecting additional sheath oil.
- Figure 4: Comparison of read-out of multi-cell droplets and single cell drop lets.
- Figure 5: Schematic depiction of adding an end of barcode signal.
- Figure 6: Encapsulation of combinatorial samples avoiding cross-contamination.
- Figure 7: Encapsulation of homogeneously concentrated compounds delivered by an auto sampler in dispersed form spaced out by a miscible carri-er phase.

### Detailed description of the invention

The present disclosure provides a microfluidic device allowing the generation and screening of combinatorial samples in a high throughput fashion. Starting with a number of n inlets (into which n different compounds can be injected) a total of up to 2ⁿ-1 chemically distinct samples can be generated in an automated fashion.

All channels providing a liquid to the droplet maker are arranged "upstream" of the droplet maker within the meaning of the instant disclosure. The outlet channel transporting the droplets or sequence of droplets is arranged "downstream" of the droplet maker. The terms droplets or plugs are used synonymously.

An aqueous liquid within the meaning of the present disclosure comprises every liquid that is miscible with water. In contrary, the immiscible phase comprises every liquid that is not miscible with water, like oil.

The device of the present disclosure can be used for generating an optical barcoding system for the newly generated combinatorial samples, hence drastically facilitating downstream screening application (e.g. screening the samples for biological effects). The technology is very useful for a variety of applications including stem cell differentiation, combinatorial drug screens and combinatorial chemistry.

Document WO2013037962 discloses a device and a sample barcoding approach. The instant disclosure provides further details of the device which are novel and inventive over the disclosure of WO2013037962.

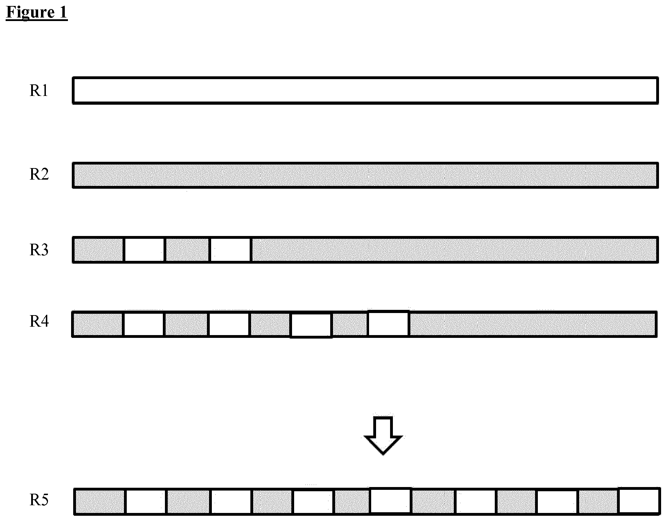

Figure 1 shows in R1 to R4 different start condition before analyzing a sequence of droplets. The resistance (R) of a reservoir such as tubing depends on the inner medium and is particularly high for two-phase systems. R1 shows a tubing filled with air, R2 shows a tubing filled with liquid, R3 shows a tubing filled with only a few plugs and R4 shows a tubing filled with many plugs. Basically, the hydrodynamic resistance in the setups shown in R1 to R4 is different. As a consequence, the tubing has to be filled with "dummy" plugs or droplets before the samples to be analyzed are generated to achieve a more constant resistance throughout the entire experiment (R5).

After the combinatorial samples are generated using e.g. a braille display chip, they are stored in a sequential fashion either in a tubing, capillary or microfluidic channel. In the beginning of the experiment this reservoir does not contain any plugs, but rather air or any priming liquid such as oil or water. However, moving this single-phase system typically requires a lower backpressure compared to moving an array of plugs (a two-phase system). Hence during the course of the experiment, in which more and more plugs are generated and injected into the reservoir, the backpressure changes resulting in inhomogeneous sample sizes and inhomogeneous fractions of individual compounds within mixtures. This effect can be overcome by priming the system with "priming plugs" (e.g. water plugs in oil), generated in the same way as the later samples for analysis, so that only after the tubing has been filled completely with the priming plugs or droplets (or optionally even flushed for a longer time period), the assay samples for analysis are generated. The assay samples will experience a much lower change in back pressure over time (as the number of total plugs in the system remains almost constant) and hence hardly change in size.

Successful operation of the combinatorial Braille device (microfluidic device) requires careful adjustments of the resistances of all channels. For example, the channels for all aqueous samples should have the same resistance, which can be achieved by the use of resistors (to compensate for differences in length, width or height). Additionally, the channel downstream of the oil inlet must have a higher resistance than the channel between the drop maker (T-junction) and the sample outlet, as otherwise aqueous samples are occasionally pushed into the oil channel, changing the desired direction of flow (from the oil inlet to the sample outlet) inside the device.

The size of the aqueous plugs or droplets also varies if the sample channels upstream of the drop maker have significantly different resistances. This is the case for the geometry shown in WO2013037962 as the length for the disclosed channels differs significantly. The instant disclosure provides a microfluidic device (chip) with sample channels upstream of the drop maker having the same length. Thus, varying sample sizes and varying fractions of individual compounds are avoided within a mixture. A fluidic resistor at the inlet of the immiscible phase (oil) can be used to avoid that the aqueous samples (optionally injected at much higher flow rates as compared to the oil) enter the oil channel upon opening of the valves (referring to the valves that control the flow of aqueous samples towards the drop maker).

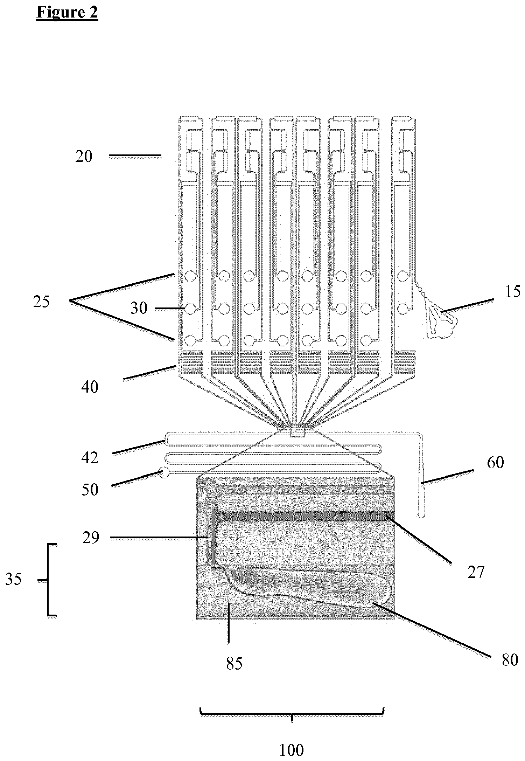

Figure 2 shows a setup of a microfluidic device having fluidic resistors of the sample inlet channels 40 as well as a fluidic resistor of the immiscible phase channel 42. The fluidic resistors of the of the sample inlet channel 40 are used to adjust the same length for each sample inlet channel. The fluidic resistor of the immiscible phase 42 channel should ensure that the resistance of the immiscible phase channel is higher that the resistance of the outlet channel and/or read-out channel downstream of the droplet maker. Upstream of the fluidic resistors 40 are the sample inlets 25 and the waste outlet 30 arranged. On top of figure 2 the valves 20 are arranged in a so called valve module. A cell inlet 15 can be used to flush cells into the microfluidic device. The immiscble phase inlet 50 applies the immiscible phase 85.

The droplet maker 100 comprises a T-junction 35 in the embodiment of figure 1 as well as a sample channel 29 and sample inlet channel 27. A droplet 80 is formed in the immiscible phase 85

Many biological and chemical assays require the addition of further substrates to the samples after their initial generation. This has be done for instance after an incubation time to initiate a readout reaction based on fluorescence. Technically, this task can be achieved using a fusion module as described in by Clausell-Tormos et al. (Chem Biol. May 2008;15(5):427-437). However, when using samples containing cells or high concentrations of protein, this approach is difficult, as wetting is frequently observed at the point where the samples exit the storage reservoir and enter the microfluidic fusion chip. The inventors discovered that this can be avoided by injecting additional carrier oil (acting similar to the sheath fluid in FACS applications) with a low concentration of surfactant at this point. Geometrically this requires additional outer channels (2D configuration) or a coaxial flow of oil (3D configuration) using an additional tubing around the reservoir into which oil is continuously injected and further flows into the microfluidic fusion chip, hence insulating the aqueous samples from the channel walls.

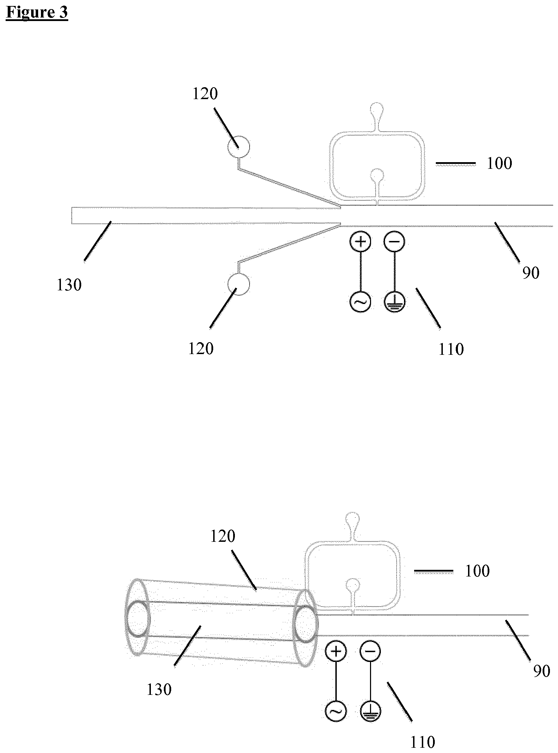

Figure 3 shows schematically setups for the addition of additional substrates by additional immiscible phase inlets 120 to the samples. Such an addition requires a fusion step involving the injection of all sample plugs through a connection port for droplet fusion 130 into a second micro fluidic device. Fusion electrodes 110 can be arranged at the fusion chamber 90 as well as the substrate droplet maker 100. Wetting occurs frequently at the transition point from the tubing to the channel walls. This can be overcome by injecting additional "sheath oil" either in a 2D or 3D configuration (120 top and bottom).

When generating plugs that host cells, it is difficult to obtain equal cell numbers across all samples (Clausell-Tormos et al, Chem Biol. May 2008;15(5):427-437). This may cause problems in drug screening applications, as a strong readout signal (e.g. in a cell-based fluorescence assay) could either be due to a particularly effective drug or simply to a sample with an extraordinary high number of cells. In theory, this problem can be overcome by performing single cell assays: Using a cell density corresponding to less than one cell per plug volume, most plugs will contain either one or no cell. This allows omitting all samples showing only background signals (= empty plugs), while the plugs showing a signal intensity, which is significantly above background, will host most likely the same cell number (n=1). However, as single cell assays are subjected to biological variation, this approach requires a high number of replicates. Experimentally generating droplets, which are much smaller than the plugs described in WO2013037962 at high frequency, may solve this problem. However, due to the decreased size, these droplets would typically not keep a sequential order: If their diameter is smaller than the diameter of the reservoir, the different samples can shuffle, thus making it impossible to track the sample identity. However, this can be avoided by using larger mineral oil plugs (diameter significantly above the diameter of the reservoir) to space out the small droplets.

The samples are eventually flushed for the readout through a channel with a diameter comparable to that of the small droplets, so that each sample is measured individually without the possibility for two samples passing the detector at the same time. It is important to note that the diameter of the reservoir for incubation (tubing) cannot have such a small diameter, as this would result in resistances that cannot be handled experimentally. We hence suggest having a relatively large diameter (> 100µm) of the reservoir for incubation, while passing the samples through a narrow constriction (< 100µm) upstream or at the readout point.

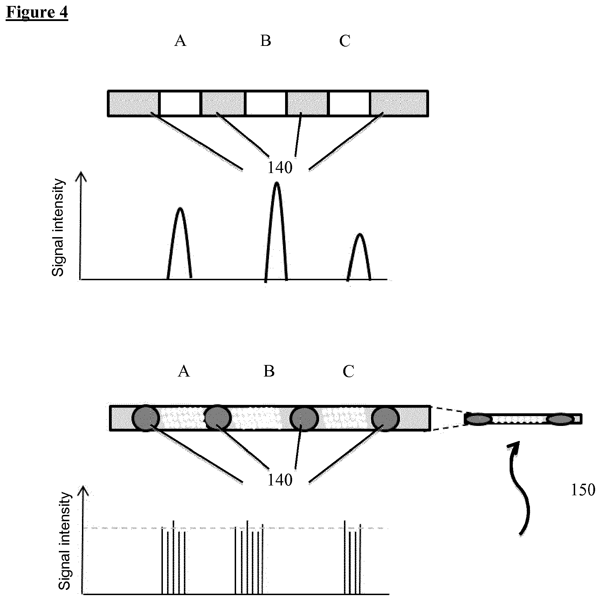

Figure 4 shows in the upper part that plug hosting different cell numbers (A 68 cells; B 75 cells; C 53 cells) will cause different signal intensities in the readout. This can be overcome by single-cell analysis. If a particular sample has less cells, the number of positive peaks will be decreased, but their average intensity remains the same (bottom of figure 4). Experimentally this requires the use of large diameter reservoirs and small diameter readout channels for the signal read-out 150. The single cell droplets are spaced out with larger immiscible phase plugs 140.

It is possible to use a micro fluidic device for a barcoding strategy of samples by making use of plugs containing different fluorophores (or concentrations thereof). As their sequence is kept constant throughout the entire experiment, samples can be used to write binary codes (e.g. high intensity = 1; low intensity = 0). It has been discovered that this type of barcoding becomes much more reliable when adding a unique signal for encoding the end of the barcode. This can be done by generating a sample with intermediate signal intensity or a completely different signal (color).

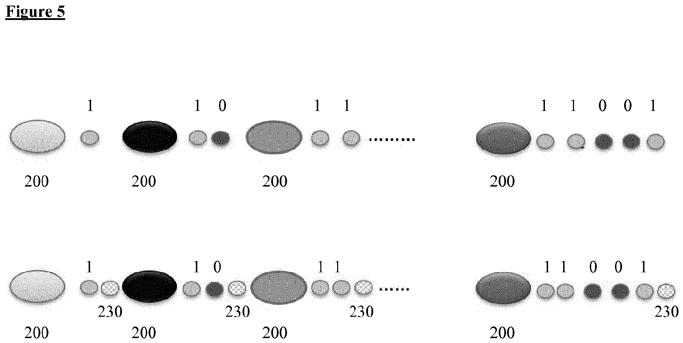

Figure 5 shows that the readability of the binary barcodes (1 and 0) can be drastically improved by adding an additional "end of barcode" signal 230. This is particularly relevant as the number of digits per barcode is not constant, making it difficult to define the end of a barcode. Each barcode can be separated by immiscible phase plugs 200.

Cross-contamination may occur in microfluidic devices making use of channels through which different reagents are flushed sequentially (based on the mixture to be generated), This is particularly relevant, as each channel upstream of the droplet maker has a certain dead volume, which remains after the generation of a particular mixture. To overcome this problem, the present disclosure provides a method for flushing out these remains and encapsulating them into a so-called "waste plug" in between each sample mixture.

The method is based on splitting the generation of each new sample (each new combinatorial mixture) into two phases: First, the valve configuration for the generation of this particular mixture (VCᵢ) is set for just a very short time (a time period corresponding to less than the desired sample size for a given assay; e.g. Is) during which the remains of the previous sample are flushed into the droplet maker (mixing with and contaminating the current sample). Then the valve configuration is switched so that all aqueous liquids are sent to the waste while oil is still injected into the droplet maker. In consequence, an oil spacer is generated physically separating this newly generated waste plug from the next sample. Now the valve configuration is switched back to VCᵢ. As the dead volume of the channels is now already filled with the desired mixture, no cross-contamination occurs and a plug with known sample composition is generated. Noteworthy, there is hardly any alternative to this procedure: Flushing the channels with washing buffer in between each sample would not overcome the cross-contamination issue, as it would remain in the dead volume of the channel network as well, thus contaminating or at least diluting the next (i + 1) sample.

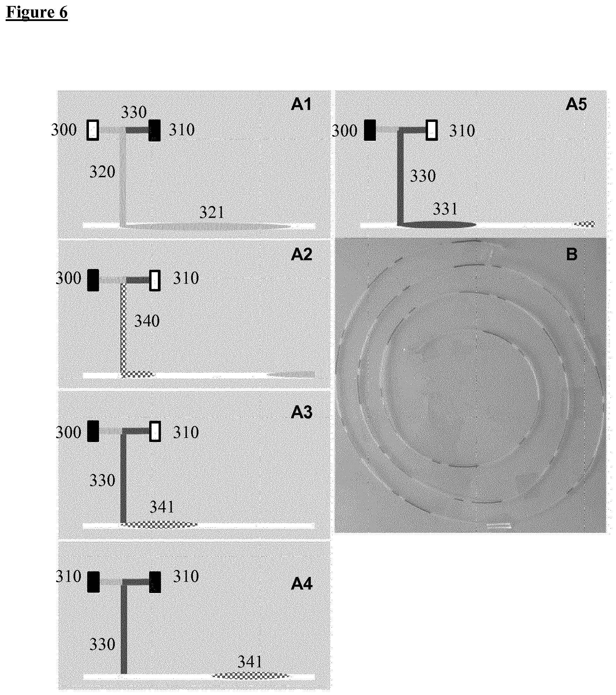

Figure 6 shows the encapsulation of a combinatorial sample into droplets without significant cross-contamination between the samples. An open valve 300 allows the respective sample to enter the channel and a closed valve 310 will stop the respective sample from entering the channel. A1-A5: After the encapsulation of a particular first combinatorial sample 320 the channels upstream of the drop maker are still filled with this sample and droplets thereof 321. These remains can be eliminated by shortly flushing the channels with a second sample mixture 330, followed by the injection of only an immiscible phase like oil. In consequence a waste plug 341 is generated from the mixture of samples 340, while the channels upstream of the drop maker are filled with pure 330. Hence opening the valves for the generation of 330 again results in the generation of a pure new combinatorial sample droplet 331, without any significant contamination from the previous sample. Part B of figure 6 shows a sequence of waste and sample plugs generated as described in A1 to A5.

WO2013037962 also discloses the idea of sequentially injecting different compounds into at least one of the inlets of the combinatorial microfluidic chip. This can, for example, be achieved by connecting an auto sampler to the microfluidic chip. However, each compound aspirated by an auto sampler from microwell plates is transported to the microfluidic chip using a miscible carrier phase (e.g. buffer). This may cause two problems: The compound is diluted according to Tailor-Aris dispersion and furthermore the miscible phase is also injected into the combinatorial chip. However, for the generation of systematic combinatorial mixtures it is typically desirable dealing with pure, homogenously concentrated compounds. To achieve this, the beginning and end of each compound plug coming from the auto sampler can be truncated and sent to the waste (comp. fig. 2). The instant disclosure provides a method installing a feedback loop between the auto sampler and the control of the braille display: Whenever the auto sampler injects a new compound into the tubing leading to the microfluidic chip, an electrical signal (relay signal) is send to the control software. After a constant delay in time for each compound, the dispersed compound plug arrives at the microfluidic chip, where its beginning and end is transferred to the waste by switching the valves accordingly (based on a pre-determined time sequence for the valve configurations). Due to the internal reference signal for each sample (the relay signal coming from the auto sampler), efficient synchronization between the two devices is guaranteed.

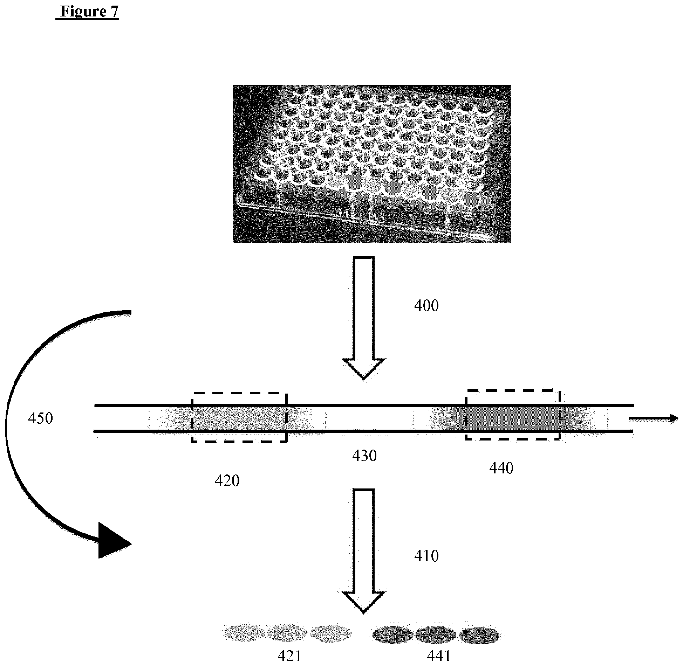

Figure 7 shows the encapsulation of homogeneously concentrated compounds delivered by an auto sampler 400 in dispersed form spaced out by a miscible carrier phase. The (dispersed) beginning and end of each compound plug, as well as the spacer, can be sent to the waste by synchronizing the valve configuration of the braille display with the arrival of compound plugs at the microfluidic chip. Each time the auto sampler 400 injects a compound into the tubing leading to the microfluidic chip, an electrical signal serving as an internal reference point 450 is sent to the control software of the braille display. Only after a pre-determined delay in time 430 and only for a pre-determined duration 440, the valves are switched to allow for the delivery of the pure compound 421 and 441 to the drop maker. During all other times the valve configuration sends all liquid coming from the auto sampler to the waste. The arrow at the right side indicates the direction of flow.

### Reference Number List

- 0: droplet encoding 0
- 1: droplet encoding 1
- 15: cell inlet
- 20: valve
- 25: sample inlets
- 27: sample inlet channel
- 29: sample channel
- 30: waste outlet
- 35: T-junction
- 40: fluidic resistor
- 42: immiscible phase fluidic resistor
- 50: immiscible phase inlet
- 60: outlet channel
- 80: droplet channel
- 85: immiscible phase
- 90: fusion chamber
- 100: substrate droplet maker
- 110: fusion electrodes
- 120: additional immiscible phase inlets
- 130: connection port for droplet fusion
- 140: mineral oil
- 150: signal read-out
- 200: spacer
- 230: droplet encoding end of sequence
- 300: open valve
- 310: closed valve
- 320: first sample
- 321: droplet of first sample
- 330: second sample
- 331: droplet of second sample
- 340: mixture of first and second sample
- 341: droplet of mixture of first and second sample
- 350: immiscible phase
- 400: auto sample
- 410: valve control
- 421: droplet first sample
- 430: delay t_{w}
- 440: delivery second sample t_{d}
- 441: droplet second sample
- 450: electrical signal serving as an internal reference point

## Claims

1. A microfluidic device for producing droplets of at least one sample into an immiscible phase, the device comprising a droplet maker (100) connecting an immiscible phase channel (42) and a sample channel having a plurality of sample inlets (25) connected to a plurality of sample inlet channels (27) injecting the at least one sample into the sample channel (29), wherein the injection of the at least one sample is controlled by a plurality of sample valves (20), so that the at least one sample flows either towards a sample waste outlet (30) or into one of the plurality of sample inlet channels (27), wherein the plurality of sample inlet channels (27) have the same hydrodynamic resistance resulting from the length, height and width of the sample inlet channel (27) upstream of the droplet maker (100),
the microfluidic device has an outlet channel (60) downstream of the droplet maker (100), wherein the droplets flow into said outlet channel,
**characterised in that**
the hydrodynamic resistance of the outlet channel (60) is lower than the hydrodynamic resistance of the immiscible phase channel (42), and
wherein said hydrodynamic resistance of the outlet channel resulting from the length, height and width of the outlet channel is lower than the hydrodynamic resistance of the sample inlets channels.

2. The microfluidic device of claim 1, wherein ones of the plurality of sample inlet channels have a sample fluidic resistor to adjust length.

3. The microfluidic device of claim 1, further comprising an immiscible phase fluidic resistor (42) of the immiscible phase channel upstream of the droplet maker (100) to ensure a higher resistance of the immiscible phase channel than the resistance of the sample channel to avoid that the at least one sample can enter the immiscible phase channel.

4. The microfluidic device of one of claims 1 to 3, wherein the sample droplets flow into a read-out channel.

5. The microfluidic device of claim 3, comprising immiscible phase inlets (120) located at a transition point where samples are flushed out of at least one sample storage reservoir into a second microfluidic device.

6. The microfluidic device of claim 4, wherein the diameter of the read-out channel is comparable in size of the droplets of the at least one sample.

7. The microfluidic device of claim 5, wherein the immiscible phase inlets (120) are additional outer channels or channels arranged coaxially with the sample storage.

8. A method for providing a sequence of droplets of at least one sample, the method comprising:
- providing at least two compounds to a microfluidic device according to any of claims 1 to 7;
- producing at least one combinatorial sample out of the at least two compounds having a specific mixture of the at least two compounds;
- injecting the at least one combinatorial sample into the microfluidic device;
- generating in the microfluidic device at least one droplet of the at least one combinatorial sample in an immiscible phase; and
- separating the at least one droplet with at least one immiscible phase;
- providing at least one priming droplet in front of the first of the at least one droplet of the at least one combinatorial sample.

9. The method of claim 8, wherein the at least one combinatorial sample comprises preferably one prokaryotic or eukaryotic cell.

10. The method of one of claims 8 or 9, wherein at least one compound of the at least two compounds is aspirated or transferred from a storage reservoir.

11. The method of one of claims 8 to 10, wherein a combinatorial sample is transferred from a storage reservoir into a read-out channel having a diameter, which is no more than half of the diameter of the storage reservoir.

12. The method of one of claims 8 to 11, wherein the sequence of the droplets are produced with a significantly smaller diameter than the outlet channel and wherein ones of the sequence of droplets are confined or separated from other ones of the sequence of droplets containing a different sample composition using plugs of a third immiscible phase having a diameter significantly above the diameter of the reservoir to space out the ones of the sequence of droplets.

13. The method of one of claims 8 to 12, wherein directly at the transition point from one microfluidic device to a second microfluidic device, additional immiscible phase inlets (120) are used to flush the at least one sample into the second microfluidic device.

14. The method of one of claims 8 to 13, wherein aspirating the at least one compound is synchronized with the valves of the microfluidic device so that only a medium section of the aspirated at least one compound is used for droplet making.

15. The method of one of claims 8 to 14, wherein an optical identifier is generated between optical barcodes, wherein optical barcode comprises sequential droplet sequences using different properties of the droplets and wherein the end of each optical barcode is marked by droplets having a unique composition.

16. The method of one of the claims 8 to 15, wherein prior to injecting the at least one combinatorial sample into the microfluidic device the remains of a previous combinatorial sample are flushed into the droplet maker (100) using the following combinatorial sample to produce a waste plug followed by transferring all aqueous liquids to the waste while the immiscible phase is still injected into the droplet maker (100) so that a spacer of the immiscible phase separates the waste plug from the following combinatorial sample.

## Patentansprüche

1. Mikrofluidvorrichtung zum Erzeugen von Tröpfchen von mindestens einer Probe in eine nicht mischbare Phase, die Vorrichtung umfasst einen Tröpfchenerzeuger (100), verbindend einen nicht mischbaren Phasenkanal (42) und einen Probenkanal mit einer Vielzahl von Probeneinlässen (25), verbunden mit einer Vielzahl von Probeneinlasskanälen (27), injizierend die mindestens eine Probe in den Probenkanal (29), wobei die Injektion der mindestens einen Probe durch eine Vielzahl von Probenventilen (20) gesteuert wird, so dass die mindestens eine Probe entweder zu einem Probenabfallauslass (30) oder in einen der Vielzahl von Probeneinlasskanälen (27) fließt, wobei die Vielzahl von Probeneinlasskanälen (27) den gleichen hydrodynamischen Widerstand aufweisen, sich aus der Länge, Höhe und Breite des Probeneinlasskanals (27) stromaufwärts des Tröpfchenerzeugers (100) ergebend,
die Mikrofluidvorrichtung weist einen Auslasskanal (60) stromabwärts des Tröpfchenerzeugers (100) auf, bei welchem die Tröpfchen in den Auslasskanal strömen, **dadurch gekennzeichnet, dass**
der hydrodynamische Widerstand des Auslasskanals (60) geringer ist als der hydrodynamische Widerstand des nicht mischbaren Phasenkanals (42), und bei welchem der hydrodynamische Widerstand des Auslasskanals, sich aus der Länge, Höhe und Breite des Auslasskanals ergebend, geringer ist als der hydrodynamische Widerstand der Probeneinlasskanäle.

2. Mikrofluidvorrichtung nach Anspruch 1, bei welcher einer der Vielzahl von Probeneinlasskanälen einen Probenfluidwiderstand zum Einstellen der Länge aufweist.

3. Mikrofluidvorrichtung nach Anspruch 1, ferner umfassend einen nicht mischbaren Phasenfluidwiderstand (42) des nicht mischbaren Phasenkanals stromaufwärts des Tröpfchenerzeugers (100), um einen höheren Widerstand des nicht mischbaren Phasenkanals als den Widerstand des Probenkanals zu gewährleisten, um zu verhindern, dass die mindestens eine Probe in den nicht mischbaren Phasenkanal eintreten kann.

4. Mikrofluidvorrichtung nach einem der Ansprüche 1 bis 3, bei welchem die Probentröpfchen in einen Auslesekanal fließen.

5. Mikrofluidvorrichtung nach Anspruch 3, umfassend nicht mischbare Phaseneinlässe (120), die an einem Übergangspunkt angeordnet sind, an dem Proben aus mindestens einem von einem Probenspeicherreservoir in eine zweite Mikrofluidvorrichtung gespült werden.

6. Mikrofluidvorrichtung nach Anspruch 4, bei welcher der Durchmesser des Auslesekanals in der Größe der Tröpfchen der mindestens einen Probe vergleichbar ist.

7. Mikrofluidvorrichtung nach Anspruch 5, bei welcher die nicht mischbaren Phaseneinlässe (120) zusätzliche äußere Kanäle oder Kanäle, angeordnet koaxial mit dem Probenspeicher, sind.

8. Verfahren zum Bereitstellen einer Sequenz von Tröpfchen von mindestens einer Probe, das Verfahren umfasst:
- Bereitstellen von mindestens zwei Zusammensetzungen für eine Mikrofluidvorrichtung gemäß einem der Ansprüche 1 bis 7;
- Herstellen mindestens einer kombinatorischen Probe aus den mindestens zwei Zusammensetzungen mit einer spezifischen Mischung der mindestens zwei Zusammensetzungen;
- Injizieren der mindestens einen kombinatorischen Probe in die Mikrofluidvorrichtung;
- Erzeugen in der Mikrofluidvorrichtung mindestens ein Tröpfchen der mindestens einen kombinatorischen Probe in einer nicht mischbaren Phase; und
- Abscheiden des mindestens einen Tropfens mit mindestens einer nicht mischbaren Phase;
- Bereitstellen mindestens eines Priming-Tropfens vor dem ersten des mindestens einen Tropfens der mindestens einen kombinatorischen Probe.

9. Verfahren nach Anspruch 8, bei welchem die mindestens eine kombinatorische Probe vorzugsweise eine prokaryotische oder eukaryotische Zelle umfasst.

10. Verfahren nach einem der Ansprüche 8 oder 9, bei welchem mindestens eine Zusammensetzung der mindestens zwei Zusammensetzungen aus einem Reservoir aspiriert oder transferiert wird.

11. Verfahren nach einem der Ansprüche 8 bis 10, bei welchem eine kombinatorische Probe aus einem Reservoir in einen Auslesekanal mit einem Durchmesser übertragen wird, der nicht mehr als die Hälfte des Durchmessers des Reservoirs beträgt.

12. Verfahren nach einem der Ansprüche 8 bis 11, bei welchem die Sequenz der Tröpfchen mit einem signifikant kleineren Durchmesser als der Auslasskanal erzeugt wird und bei welchem einzelne der Sequenz von Tröpfchen eingeschlossen oder von anderen der Sequenz von Tröpfchen getrennt werden, enthaltend eine andere Probenzusammensetzung, unter Verwendung von Pfropfen einer dritten nicht mischbaren Phase mit einem Durchmesser signifikant über dem Durchmesser des Reservoirs, um die einzelnen der Sequenz von Tröpfchen auszusondern.

13. Verfahren nach einem der Ansprüche 8 bis 12, bei welchem direkt am Übergangspunkt von einer Mikrofluidvorrichtung zu einer zweiten Mikrofluidvorrichtung zusätzliche nicht mischbare Phaseneinlässe (120) verwendet werden, um die mindestens eine Probe in die zweite Mikrofluidvorrichtung zu spülen.

14. Verfahren nach einem der Ansprüche 8 bis 13, bei welchem das Ansaugen der mindestens einen Zusammensetzung mit den Ventilen der Mikrofluidvorrichtung synchronisiert wird, so dass nur ein mittlerer Abschnitt der angesaugten mindestens einen Zusammensetzung zur Tröpfchenbildung verwendet wird.

15. Verfahren nach einem der Ansprüche 8 bis 14, bei dem ein optischer Identifikator zwischen optischen Strichcodes erzeugt wird, wobei der optische Strichcode aufeinanderfolgende Tröpfchensequenzen umfasst, die unterschiedliche Eigenschaften der Tröpfchen verwenden, und wobei das Ende jedes optischen Strichcodes durch Tröpfchen mit einer einzigartigen Zusammensetzung markiert wird.

16. Verfahren nach einem der Ansprüche 8 bis 15, bei welchem vor dem Injizieren der mindestens einen kombinatorischen Probe in die Mikrofluidvorrichtung die Reste einer vorhergehenden kombinatorischen Probe in den Tröpfchenerzeuger (100) gespült werden, wobei die nachfolgende kombinatorische Probe verwendet wird, um einen Abfallpfropfen zu erzeugen, gefolgt von der Übertragung aller wässrigen Flüssigkeiten auf den Abfall, während die nicht mischbare Phase noch in den Tröpfchenerzeuger (100) injiziert wird, so dass ein Abstandhalter der nicht mischbaren Phase den Abfallpfropfen von der nachfolgenden kombinatorischen Probe trennt.

## Revendications

1. Dispositif microfluidique pour produire des gouttelettes d'au moins un échantillon dans une phase non miscible, le dispositif comprenant un générateur de gouttelettes (100) reliant un canal de phase non miscible (42) et un canal d'échantillon ayant une pluralité d'entrées d'échantillon (25) reliées à une pluralité de canaux d'entrée d'échantillon (27) injectant le au moins un échantillon dans le canal d'échantillon (29), dans lequel l'injection du au moins un échantillon est commandée par une pluralité de vannes d'échantillonnage (20), de sorte que le au moins un échantillon s'écoule soit vers une sortie de déchets d'échantillon (30) soit dans l'un de la pluralité de canaux d'entrée d'échantillon (27), dans lequel la pluralité de canaux d'entrée d'échantillon (27) ont la même résistance hydrodynamique résultant de la longueur, de la hauteur et de la largeur du canal d'entrée d'échantillon (27) en amont du générateur de gouttelettes (100),
le dispositif microfluidique comporte un canal de sortie (60) en aval du générateur de gouttelettes (100), dans lequel les gouttelettes s'écoulent dans ledit canal de sortie,
**caractérisé en ce que**
la résistance hydrodynamique du canal de sortie (60) est inférieure à la résistance hydrodynamique du canal de phase non miscible (42), et
dans lequel ladite résistance hydrodynamique du canal de sortie résultant de la longueur, de la hauteur et de la largeur du canal de sortie est inférieure à la résistance hydrodynamique des canaux d'entrée d'échantillon.

2. Dispositif microfluidique selon la revendication 1, dans lequel les uns de la pluralité de canaux d'entrée d'échantillon possèdent une résistance fluidique d'échantillon pour ajuster la longueur.

3. Dispositif microfluidique selon la revendication 1, comprenant en outre une résistance fluidique de phase non miscible (42) du canal de phase non miscible en amont du générateur de gouttelettes (100) pour assurer une résistance du canal de phase non miscible supérieure à la résistance du canal d'échantillon afin d'éviter que le au moins un échantillon puisse entrer dans le canal de phase non miscible.

4. Dispositif microfluidique selon l'une quelconque des revendications 1 à 3, dans lequel les gouttelettes d'échantillon s'écoulent dans un canal de lecture.

5. Dispositif microfluidique selon la revendication 3, comprenant des entrées de phase non miscible (120) situées à un point de transition où les échantillons sont purgés d'au moins un réservoir de stockage d'échantillons vers un deuxième dispositif microfluidique.

6. Dispositif microfluidique selon la revendication 4, dans lequel le diamètre du canal de lecture est comparable en taille aux gouttelettes du au moins un échantillon.

7. Dispositif microfluidique selon la revendication 5, dans lequel les entrées de phase non miscible (120) sont des canaux extérieurs supplémentaires ou des canaux disposés coaxialement avec le stockage d'échantillons.

8. Procédé pour fournir une séquence de gouttelettes d'au moins un échantillon, le procédé comprenant :
- la fourniture d'au moins deux composés à un dispositif microfluidique selon l'une quelconque des revendications 1 à 7 ;
- la production d'au moins un échantillon combinatoire à partir des au moins deux composés ayant un mélange spécifique des au moins deux composés ;
- l'injection du au moins un échantillon combinatoire dans le dispositif microfluidique ;
- la production dans le dispositif microfluidique d'au moins une gouttelette du au moins un échantillon combinatoire dans une phase non miscible ; et
- la séparation de la au moins une gouttelette avec au moins une phase non miscible ;
- la fourniture d'au moins une gouttelette d'amorçage devant la première de la au moins une gouttelette de l'au moins un échantillon combinatoire.

9. Procédé selon la revendication 8, dans lequel le au moins un échantillon combinatoire comprend de préférence une cellule procaryote ou eucaryote.

10. Procédé selon l'une quelconque des revendications 8 ou 9, dans lequel au moins un composé parmi les au moins deux composés est aspiré ou transféré à partir d'un réservoir de stockage.

11. Procédé selon l'une quelconque des revendications 8 à 10, dans lequel un échantillon combinatoire est transféré d'un réservoir de stockage dans un canal de lecture ayant un diamètre qui n'est pas supérieur à la moitié du diamètre du réservoir de stockage.

12. Procédé selon l'une quelconque des revendications 8 à 11, dans lequel la séquence de gouttelettes est produite avec un diamètre significativement plus petit que le canal de sortie et dans lequel certaines gouttelettes de la séquence de gouttelettes sont confinées ou séparées d'autres gouttelettes de la séquence de gouttelettes contenant une composition d'échantillon différente en utilisant des bouchons d'une troisième phase non miscible ayant un diamètre significativement supérieur au diamètre du réservoir pour espacer les gouttelettes de la séquence de gouttelettes.

13. Procédé selon l'une quelconque des revendications 8 à 12, dans lequel, directement au point de transition d'un dispositif microfluidique à un deuxième dispositif microfluidique, des entrées de phase non miscible supplémentaires (120) sont utilisées pour purger le au moins un échantillon dans le deuxième dispositif microfluidique.

14. Procédé selon l'une quelconque des revendications 8 à 13, dans lequel l'aspiration du au moins un composé est synchronisée avec les vannes du dispositif microfluidique de sorte que seule une section moyenne du au moins un composé aspiré est utilisée pour la fabrication de gouttelettes.

15. Procédé selon l'une des revendications 8 à 14, dans lequel un identificateur optique est généré entre des codes-barres optiques, dans lequel un code-barres optique comprend des séquences de gouttelettes séquentielles utilisant des propriétés différentes des gouttelettes et dans lequel la fin de chaque code-barres optique est marquée par des gouttelettes ayant une composition unique.

16. Procédé selon l'une quelconque des revendications 8 à 15, dans lequel, avant d'injecter le au moins un échantillon combinatoire dans le dispositif microfluidique, les restes d'un échantillon combinatoire précédent sont purgés dans le générateur de gouttelettes (100) en utilisant l'échantillon combinatoire suivant pour produire un bouchon de déchets, puis en transférant tous les liquides aqueux vers les déchets tandis que la phase non miscible est encore en train d'être injectée dans le générateur de gouttelettes (100) de sorte qu'un espaceur de la phase non miscible sépare le bouchon de déchets de l'échantillon combinatoire suivant.
